# EUROPÄISCHE PATENTSCHRIFT

(11) **EP 2 159 394 B1**
(45) Veröffentlichungstag und Bekanntmachung des Hinweises auf die Patenterteilung: **08.03.2017**
(21) Anmeldenummer: 09010996.8
(22) Anmeldetag: 27.08.2009
(51) Int. Cl.: F02M 26/00, F02B 29/04, F02M 26/30

(54) **Gaskühler für einen Verbrennungsmotor**
Gas cooler for an internal combustion engine
Refroidisseur de gaz d'échappement pour un moteur à combustion

(30) Priorität: 28.08.2008 DE 102008044672
(43) Veröffentlichungstag der Anmeldung: 03.03.2010
(73) Patentinhaber: MAHLE Behr GmbH & Co. KG, 70469 Stuttgart (DE)
(72) Erfinder: Geskes, Peter, 73760 Ostfildern (DE)
(74) Vertreter: Grauel, Andreas

(56) Entgegenhaltungen:
- DE-A1-102004 050 778
- DE-A1-102007 013 302
- FR-A1- 2 843 449
- FR-A1- 2 856 746
- FR-A1- 2 890 698

## Beschreibung

Die Erfindung betrifft einen Gaskühler für einen Verbrennungsmotor nach dem Oberbegriff des Anspruchs 1.

US 2006/0278377 A1 beschreibt ein Modul mit in einem gemeinsamen Gehäuse integriertem Abgaskühler sowie Ladeluftkühler für einen Verbrennungsmotor. Der Abgas- und der Ladeluftkühler sind jeweils in Stapelscheiben-Bauweise ausgeführt und werden von einem flüssigen Kühlmittel zur Abführung von Wärme der komprimierten Ladeluft und des zum Zweck der Schadstoffreduktion rückgeführten Abgases durchströmt. Die Hauptströmungsrichtungen des Abgases und der Ladeluft im Bereich der gekühlten Strömungskanäle der Wärmetauscher sind dabei parallel. Der Abgaskühler ist von seiner Größe her erheblich kleiner dimensioniert als der Ladeluftkühler, wodurch allenfalls kleine Rückführraten von Abgas ermöglicht werden.

Es ist die Aufgabe der Erfindung, einen Gaskühler für einen Verbrennungsmotor anzugeben, der bei kleiner und kompakter Bauweise eine leistungsfähige Kühlung sowohl eines Ladeluftstroms als auch eines Abgasstroms bei insbesondere hohen Rückführraten des Abgases ermöglicht.

Diese Aufgabe wird für einen eingangs genannten Gaskühler erfindungsgemäß mit den kennzeichnenden Merkmalen des Anspruchs 1 gelöst. Durch die zueinander gewinkelte Anordnung der Hauptströmungsrichtungen von Ladeluft und Abgas kann jeder der Gasströme unter optimaler Ausnutzung des Bauraums gekühlt werden. Dabei wird insbesondere der Umstand erkannt und genutzt, dass der Abgasstrom aufgrund des hohen Abgasdrucks besonders zweckmäßig über einen relativ kleinen Strömungsquerschnitt des Abgaskühlers gekühlt werden kann, wobei aufgrund der hohen Temperaturen des Abgases eine zugleich relativ große Strömungslänge des Abgases in Hauptströmungsrichtung erwünscht ist. Im Fall der Ladeluft verhält sich die Anforderung an die Auslegung des Wärmetauschers anders, wobei ein möglichst großer Strömungsquerschnitt bei möglichst kleiner Strömungslänge erwünscht ist, um den Druckabfall der Ladeluft über dem Wärmetauscher möglichst niedrig zu halten.

In einer besonders optimierten und zweckmäßigen Ausführungsform verlaufen die Hauptströmungsrichtungen von Abgas und Ladeluft dabei im Wesentlichen senkrecht zueinander. Die grundsätzlichen Vorteile der Auslegung des Gaskühlers werden aber bereits dann nutzbar, wenn die Strömungsrichtungen einen Winkel von mehr als 45° einschließen.

Aus den vorgenannten Gründen ist es vorteilhaft vorgesehen, dass ein gesamter Strömungsquerschnitt des ersten Wärmetauschers größer ist als ein gesamter Strömungsquerschnitt des zweiten Wärmetauschers. In besonders bevorzugter Detailgestaltung unterscheiden sich die Strömungsquerschnitte dabei wenigstens um einen Faktor 2. Unter dem gesamten Strömungsquerschnitt ist dabei der gesamte geometrische Querschnitt des jeweiligen Wärmetauschers senkrecht zu der jeweiligen Hauptströmungsrichtung zu verstehen.

Ebenso ist es in einer vorteilhaften Ausführungsform vorgesehen, dass eine gesamte Strömungslänge des zweiten Wärmetauschers, also des Abgaskühlers, größer ist als eine gesamte Strömungslänge des ersten Wärmetauschers, also des Ladeluftkühlers. In bevorzugter Detailgestaltung überschreitet die Strömungslänge des Abgaskühlers dabei die des Ladeluftkühlers um wenigstens das 1,3-fache. Unter der Strömungslänge wird dabei die einfache geometrische Länge in Hauptströmungsrichtung verstanden, über die ein Wärmeaustausch mit benachbartem Kühlmittel stattfindet. Beeinflussungen des tatsächlichen Strömungsweges zum Beispiel durch Turbulenzerzeuger wie Rippen, Dimpel oder dergleichen bleiben für die Definition der Strömungslänge außer acht.

Zur optimalen Ausnutzung des Bauraums ist in zweckmäßiger Ausführungsform vorgesehen, dass der Abgasstrom nach Austritt aus dem zweiten Wärmetauscher in den Ladeluftstrom nach Austritt aus dem ersten Wärmetauscher einmündet, insbesondere mittels Führung des Abgasstroms in einem Umlenkglied. In dem Umlenkglied wird der Abgasstrom zweckmäßig je nach Ausführungsform um etwa 90° oder auch um etwa 180° umgelenkt. Im Bereich eines solchen Umlenkglieds können zudem Strömungsmittel vorgesehen sein, um gezielte Turbulenzen oder Richtungsänderungen in dem Abgasstrom zum Zweck der verbesserten Durchmischung mit dem Ladeluftstrom zu erzielen.

Bei einer vorteilhaften Ausführungsform ist das Umlenkglied dabei austrittsseitig des zweiten Wärmetauschers angeordnet, so dass das Abgas vom Umlenkglied zu der Ladeluft geführt wird. In möglicher Detailgestaltung kann sich dem Umlenkglied dabei noch ein Rohrglied oder Ähnliches anschließen, um eine möglichst gleichmäßige Verteilung des Abgases in den Ladeluftstrom zu erreichen, was insbesondere bei kurzen Strömungswegen zwischen Ladeluftkühler und Einlassventilen sinnvoll ist.

Bei einer alternativen oder ergänzenden Ausführungsform der Erfindung ist das Umlenkglied zwischen zwei Strömungswegen des zweiten Wärmetauschers angeordnet, insbesondere unter Ausbildung des zweiten Wärmetauschers als U-flow-Wärmetauscher. Hierdurch kann auf einfache Weise eine große Strömungslänge bei relativ kleinem Strömungsquerschnitt im zweiten Wärmetauscher erzielt werden, was der Kühlung des Abgasstroms besonders entgegenkommt.

Insbesondere für die Verwendung mit Verbrennungsmotoren für Personenkraftwagen, deren Betrieb häufige Kaltstartphasen umfasst, ist vorteilhaft vorgesehen, dass der Abgasstrom mittels eines Stellglieds wählbar unter Umgehung des zweiten Wärmetauschers in den Ladeluftstrom führbar ist. Eine solche die Kühlung umgehende Führung des Abgasstroms entspricht einem Bypasskanal, wie er für Kaltstartphasen vorgesehen ist, um insbesondere eine übermäßige Ausscheidung von Kondensat im Abgaskühler in der Kaltstartphase zu vermeiden.

Das Stellglied ist in zweckmäßiger Detailgestaltung eingangsseitig des zweiten Wärmetauschers angeordnet, wodurch sich eine einfache bauliche Realisierung ergibt. Bei einer einfachen Bauform kann es sich dabei zum Beispiel um einen mit einer Stellklappe versehenen Wanddurchbruch eines gemeinsamen Gehäuses der beiden Wärmetauscher handeln.

Bei einer weiteren bevorzugten Ausführungsform hat zumindest der Abgaskühler zumindest zwei separate Fluten für flüssiges Kühlmittel. Hierdurch kann eine mehrstufige Kühlung des Abgases erfolgen, z. B. in einer ersten Stufe mittels relativ warmen Kühlmittels z. B. aus einem Hauptkühlkreislauf des Verbrennungsmotors und in einer zweiten Stufe mittels eines kälteren Kühlmittels z. B. aus einem Niedertemperatur-Kühlkreislauf. Grundsätzlich kann auch der erster Wärmetauscher bzw. Ladeluftkühler auf eine solche zweistufige Weise gekühlt sein.

In einer allgemein bevorzugten Ausführungsform wird das flüssige Kühlmittel senkrecht zu den beiden Hauptströmungsrichtungen zugeführt und/oder abgeführt. Bei einer alternativen Ausführungsform kann das flüssige Kühlmittel auch parallel zu der Hauptströmungsrichtung zum Beispiel des Abgases zugeführt und/oder abgeführt werden. Hierzu ist dann gegebenenfalls eine weitere Umlenkung des Abgasstroms in seinem Zuführbereich zweckmäßig.

Bei einer bevorzugten Bauform ist zumindest einer der Wärmetauscher als Stapelscheiben-Wärmetauscher ausgebildet. Besonders vorteilhaft sind dabei beide Wärmetauscher als Stapelscheiben-Wärmetauscher ausgebildet. Alternativ oder ergänzend kann aber auch zumindest einer der Wärmetauscher, insbesondere auch beide Wärmetauscher als Rohrbündel-Wärmetauscher ausgebildet sein. Bei jeder der möglichen Bauformen können auf bekannte Weise zusätzliche wärmeübertragende Mittel wie Rippenbleche, eingeprägte Dimpel oder Winglets o. ä. vorgesehen sein.

Bei einer weiteren vorteilhaften Ausführungsform sind der erste Wärmetauscher und der zweite Wärmetauscher als verlötete, integrierte Einheit ausgebildet. Hierdurch ist der Wärmetauscher besonders kostengünstig und einfach herstellbar, z. B. durch Vormontage von lotplattierten Blechen und gemeinsames Verlöten beider Wärmetauscher in einem Lötofen. Alternativ können aber auch der erste Wärmetauscher und der zweite Wärmetauscher als separate, insbesondere mittels Dichtungen aneinander festgelegte Bauteile ausgebildet sein. Hierdurch kann z. B. ermöglicht werden, dass z. B. der Abgaskühler als bezüglich Kontaminationen unter Umständen anfälliges Bauelement separat austauschbar ausgelegt ist.

In allgemein bevorzugter Weiterentwicklung ist ausgangsseitig zumindest eines der Wärmetauscher ein Strömungsmittel vorgesehen, wobei durch das Strömungsmittel eine erhöhte Durchmischung des Abgases mit der Ladeluft erzielbar ist. Ein solches Strömungsmittel bewirkt eine gute Durchmischung auch bei kleinem Bauraum bzw. kurzen Strömungswegen. Das Strömungsmittel kann zum Beispiel ein insbesondere ausgangsseitig des zweiten Wärmetauschers bzw. Abgaskanals angeordnetes Verteilrohr umfassen, wodurch eine Einströmung des einen Gases in das andere Gas an mehreren Stellen und somit räumlich verteilt erfolgt. Alternativ oder ergänzend kann das Strömungsmittel ein Mischgitter umfassen, wodurch eine zusätzliche Verwirbelung und Durchmischung der zuvor zusammengeführten Gasströme erzielt wird.

Weitere Vorteile und Merkmale ergeben sich aus den nachfolgend beschriebenen Ausführungsbeispielen sowie aus den abhängigen Ansprüchen.

Nachfolgend werden mehrere bevorzugte Ausführungsbeispiele eines erfindungsgemäßen Gaskühlers beschrieben und anhand der anliegenden Zeichnungen näher erläutert.
- Fig. 1: zeigt eine schematische Darstellung eines Verbrennungsmotors mit einem Abgasrückführsystem mit einem erfindungsgemäßen Gaskühler bei zweistufiger Abgaskühlung.
- Fig. 2: zeigt den Verbrennungsmotor aus Fig. 1 bei nur einstufiger Abgaskühlung.
- Fig. 3: zeigt eine schematische räumliche Ansicht eines ersten Ausführungsbeispiels eines Gaskühlers.
- Fig. 4: zeigt eine schematische räumliche Ansicht eines zweiten Ausführungsbeispiels eines Gaskühlers mit Abgas-Bypassfunktion.
- Fig. 4a: zeigt eine Abwandlung des Ausführungsbeispiels aus Fig. 4.
- Fig. 5: zeigt ein drittes Ausführungsbeispiel eines Gaskühlers mit zwei getrennten Kühlmittelfluten des Abgaskühlers.
- Fig. 6: zeigt ein weiteres Ausführungsbeispiel eines Gaskühlers mit einer alternativen Kühlmittelführung.
- Fig. 7: zeigt ein weiteres Ausführungsbeispiel eines Gaskühlers mit einer ersten Ausführung eines Strömungsmittels.
- Fig. 8: zeigt ein weiteres Ausführungsbeispiel eines Gaskühlers mit einer zweiten Ausführung eines Strömungsmittels.
- Fig. 9: zeigt ein weiteres Ausführungsbeispiel einer Anordnung von zwei Wärmetauschern.

Ein erfindungsgemäßer Gaskühler 1 ist in die Gasführung eines Verbrennungsmotors 2 derart integriert, dass Abgas des Motors über einen Abzweig 3 teilweise rückgeführt und in dem Gaskühler 1 gekühlt wird, wobei der Hauptstrom des Abgases über einen Abgas-Turbolader 4 Frischluft komprimiert bzw. auflädt. Die komprimierte und über die Kompression erhitzte Ladeluft wird einem ersten Wärmetauscher 1a des Gaskühlers 1 zugeführt, wobei der abgezweigte Abgasstrom einem zweiten Wärmetauscher 1 b des Gaskühlers 1 zugeführt wird. Die Wärmetauscher 1a, 1b sind baulich zu einem einzigen Modul integriert. Der Gaskühler 1 wird über ein flüssiges Kühlmittel, das über Anschlüsse 5, 6 zugeführt oder abgeführt wird, gekühlt. Bei dem Kühlmittel kann es sich z. B. um das Kühlmittel des Hauptkühlkreislaufs des Verbrennungsmotors 2 handeln oder auch um Kühlmittel eines hiervon separaten Niedertemperatur-Kühlkreislaufs.

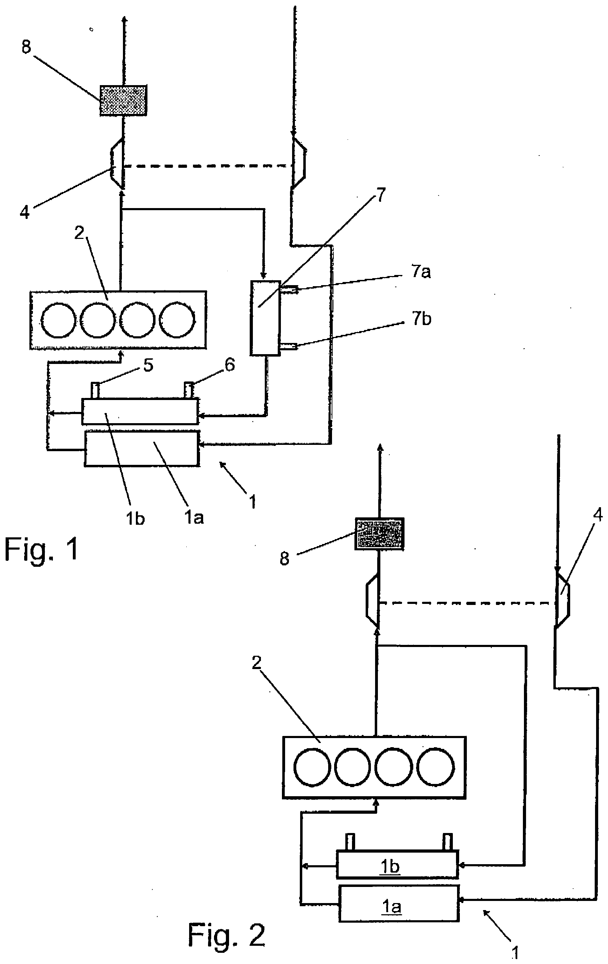

In der Darstellung gemäß Fig. 1 ist zudem ein weiterer Abgaskühler 7 vor dem integrierten zweiten Wärmetauscher 1 b zur Erhöhung der Gesamtkühlleistung für den rückgeführten Abgasstrom vorgesehen. Der Abgaskühler 7 hat ebenfalls Anschlüsse 7a, 7b zur Zuführung oder Abführung eines flüssigen Kühlmittels.

Hinter der Abgasturbine des Abgas-Turboladers 4 durchströmt der nicht mehr rückgeführte Abgasstrom noch ein Reinigungsglied 8, insbesondere einen Partikelfilter oder Oxi-Kat.

Fig. 2 zeigt eine Variante der zuvor beschriebenen Anordnung, bei der als einziger Unterschied auf den zusätzlichen Abgaskühler 7 verzichtet wird. Entsprechend ist der Abgaskühler bzw. zweite Wärmetauscher 1b besonders leistungsfähig auszulegen.

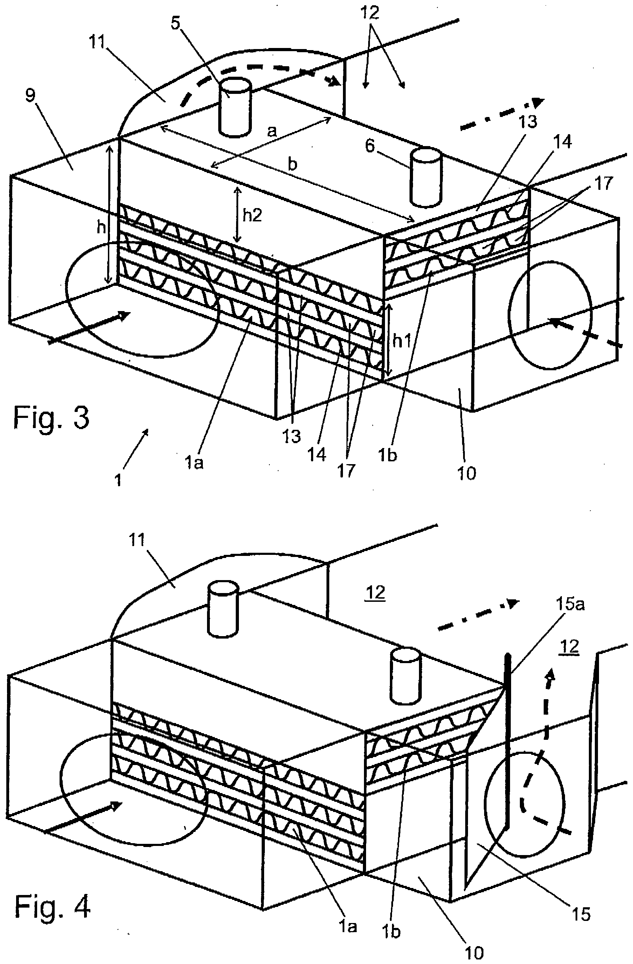

Eine erste Ausführungsform eines erfindungsgemäßen Gaskühlers ist detailliert in Fig. 3 dargestellt. Der Gaskühler 1 ist als Wärmetauscher in Stapelscheiben-Bauweise ausgebildet, wobei eine Einhüllende des Gaskühlers im Wesentlichen die Form eines Quaders mit einer Länge a einer Höhe h und einer Breite b hat. Ein bezüglich der Höhenrichtung h unterer Teil des Gaskühlers 1 ist als ein erster Wärmetauscher 1a zur Durchströmung mit Ladeluft ausgebildet, der die Höhe h1 hat. Ein darauf unmittelbar aufgesetzter und insbesondere durch gemeinsame Verlötung stoffschlüssig verbundener zweiter Wärmetauscher 1 b dient der Kühlung des rückgeführten Abgasstroms und hat die Höhe h2. Zumindest in idealisierter Betrachtung gilt h=h1+h2.

Gemäß der Zeichnung Fig. 3 strömt die Ladeluft in einer Hauptströmungsrichtung, die senkrecht auf die durch Höhenrichtung h und Breitenrichtung b definierte Seite des Wärmetauschers steht. Der Ladeluftstrom ist durch einen durchgezogenen Richtungspfeil angedeutet. Eintrittsseitig des Wärmetauschers 1 a ist ein zuführender Sammlerkasten 9 für die Ladeluft angedeutet.

Der Abgasstrom ist durch gestrichelte Pfeile angedeutet und strömt in einer Hauptströmungsrichtung durch den Gaskühler 1, die senkrecht auf die von Höhenrichtung h und Längenrichtung a aufgespannte Seite des Wärmetauschers steht und parallel zu der Breitenrichtung b verläuft. Auch ein eintrittsseitiger Sammlerkasten 10 für den Abgasstrom ist skizziert.

Die beiden Hauptströmungsrichtungen von Abgas und Ladeluft sind somit senkrecht zueinander orientiert.

Die Kühlmittelzuführungen 5, 6 sind senkrecht auf die Hauptströmungsrichtungen von Abgas und Ladeluft gerichtet. Der Gaskühler 1 ist sowohl hinsichtlich des ersten Wärmetauschers 1a als auch des zweiten Wärmetauschers 1b als Stapelscheiben-Wärmetauscher ausgebildet, wobei die Kühlmittelkanäle anschließend an die Anschlüsse 5, 6 nach Art von mittels Durchbrechungen in den Stapelscheiben ausgebildeter Kanäle durch die Wärmetauscher 1a, 1b führen. Dabei werden Zwischenräume zwischen benachbarten Stapelscheiben auf bekannt Weise auf dem Weg vom zuführenden zum abführenden Kühlmittelkanal durchströmt, so dass die Stapelscheiben flächig gekühlt werden.

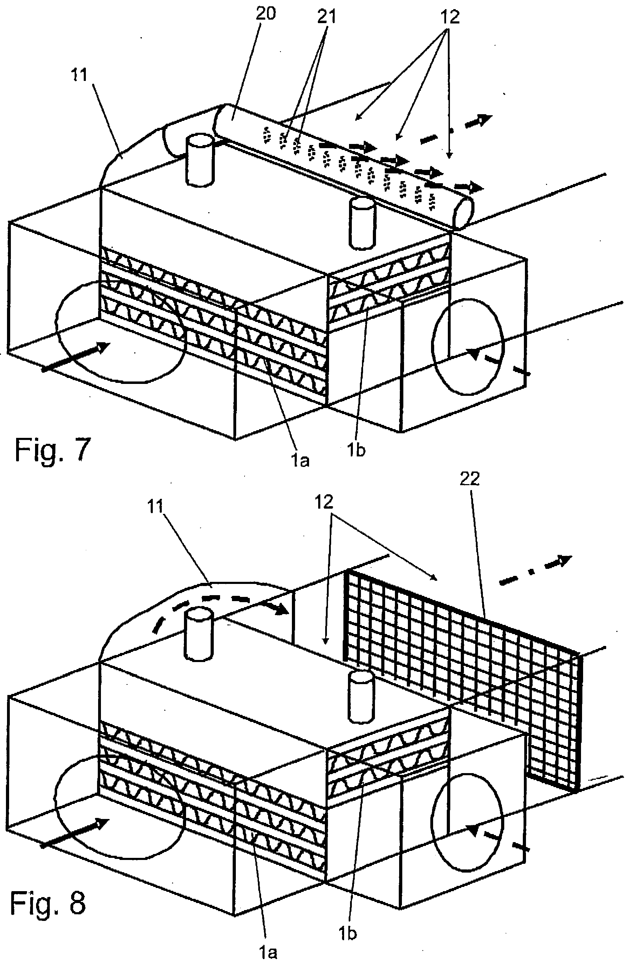

Austrittsseitig des zweiten Wärmetauschers für das Abgas ist ein Umlenkglied 11 angeordnet, das den gekühlten Abgasstrom um etwa 180° umlenkt und in den gekühlten austrittsseitigen Ladeluftstrom in einem Durchmischungsbereich 12 einmünden lässt. Austrittsseitig des Umlenkglieds 11 können optional Strömungsmittel vorgesehen sein (siehe unten Beschreibung zu Fig. 7 und Fig. 8), um den Abgasstrom optimal mit dem Ladeluftstrom zu vermischen.

Ohne Anspruch auf Maßstabstreue wird aus der Zeichnung des Ausführungsbeispiels Fig. 3 deutlich, dass die Strömungslänge des Abgasstroms, die in diesem Beispiel im Wesentlichen der Breite b entspricht, deutlich größer ist als die Strömungslänge des Ladeluftstroms, die in diesem Beispiel im Wesentlichen der Länge a entspricht.

Der erste Wärmetauscher a hat eine Bauhöhe h1 und der zweite Wärmetauscher 1 b hat eine Bauhöhe h2, die sich insgesamt etwa zur Gesamthöhe h des Wärmetauschers ergänzen. Ein gesamter Strömungsquerschnitt des ersten Wärmetauschers ergibt sich in etwa zu h1*b, wobei Abzüge aus kühlmittelführenden Platten 13 und wärmeübertragenden Rippenelementen 14 nicht berücksichtigt werden. Zwischen den Platten 13 und den Rippen 14 verbleiben jeweils Strömungskanäle 17 zur Durchströmung mit Ladeluft- bzw. Abgas. Entsprechend ergibt sich der gesamte Strömungsquerschnitt des Abgaskühlers in etwa als h2*a. In den gezeigten Ausführungsbeispielen ist der Strömungsquerschnitt des ersten Wärmetauschers jeweils deutlich größer als der Strömungsquerschnitt des zweiten Wärmetauschers, im vorliegenden Ausführungsbeispiel um mehr als das Doppelte. Dagegen ist die Strömungslänge des zweiten Wärmetauschers größer als die Strömungslänge des ersten Wärmetauschers, im vorliegenden Beispiel um mehr als das 1,3-fache.

Hierdurch wird insgesamt erreicht, dass sich die Dimensionierungen von Ladeluftkühler 1 a und Abgaskühler 1 b hinsichtlich des gemeinsam beanspruchten Bauraums optimal ergänzen, wobei die Ladeluft aufgrund des großen Strömungsquerschnitts und der kurzen Strömungslänge einen geringen Druckabfall erfährt und das Abgas bei großer Strömungslänge und kleinem Strömungsquerschnitt einen relativ großen Druckabfall bei zugleich effektiver Kühlung.

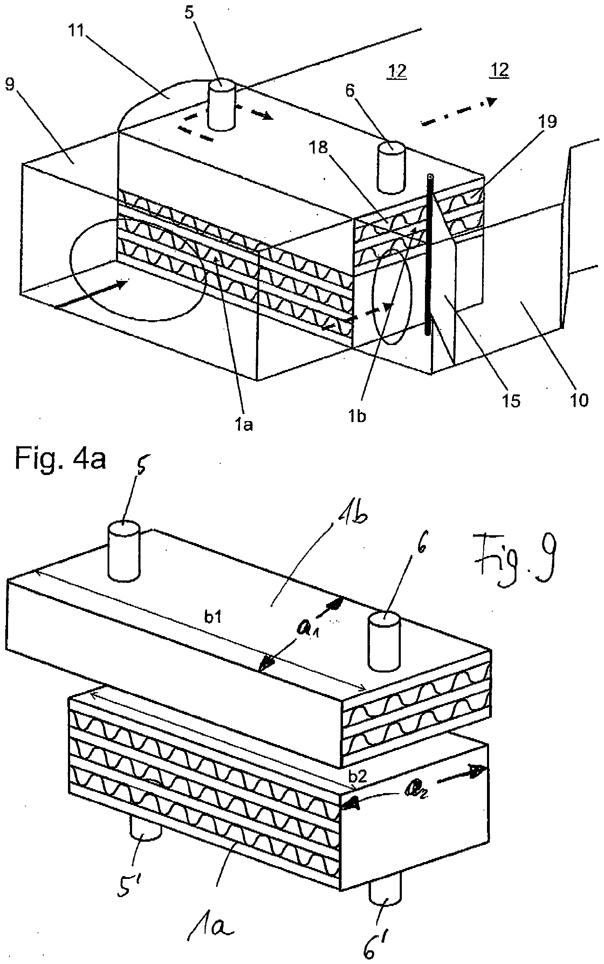

In dem zweiten Ausführungsbeispiel gemäß Fig. 4 ist eine Abwandlung des Gaskühlers aus Fig. 3 gezeigt, bei der als wesentlicher Unterschied im Bereich des eintrittsseitigen Sammlers 10 des Abgaskühlers 1b ein Stellglied 15 nach Art einer Bypassklappe vorgesehen ist. Je nach Stellung des Stellglieds 15 kann z. B. in einer Kaltstartphase des Verbrennungsmotors der rückgeführte Abgasstrom wie in Fig. 4 gezeigt an den Abgaskühler 1 b vorbei unmittelbar in den Durchmischungsbereich 12 bzw. den gekühlten Ladeluftstrom geführt werden. Bei Erreichen der Betriebstemperatur wird das Stellglied 15 um eine Drehwelle 15a verschwenkt und der Abgasstrom durchströmt dann vollständig den Abgaskühler 1 b.

Bei der in Fig. 4a gezeigten Abwandlung des Beispiels aus Fig. 4 mündet das Umlenkglied 11 nicht in den Durchmischungsbereich 12, sondern in einen rückführenden, gekühlten Strömungskanal 19 des zweiten Wärmetauschers 1 b, so dass das Umlenkglied bezüglich des Abgasstroms zwischen dem ersten Strömungsweg 18 und dem zweiten Strömungsweg 19 des Abgaskühler s angeordnet ist. Hierdurch ist dieser zumindest gasseitig als U-flow-Wärmetauscher mit zwei antiparallelen Strömungswegen 18, 19 ausgebildet. Der Sammler 10 hat dabei eine Stellklappe 15, die an einer (nicht dargestellten) Trennwand der Strömungskanäle 18, 19 ansetzt und je nach ihrer Stellung einen Bypassbetrieb (nicht gezeigt) oder eine Durchströmung des U-flow-Wärmetauschers bewirkt.

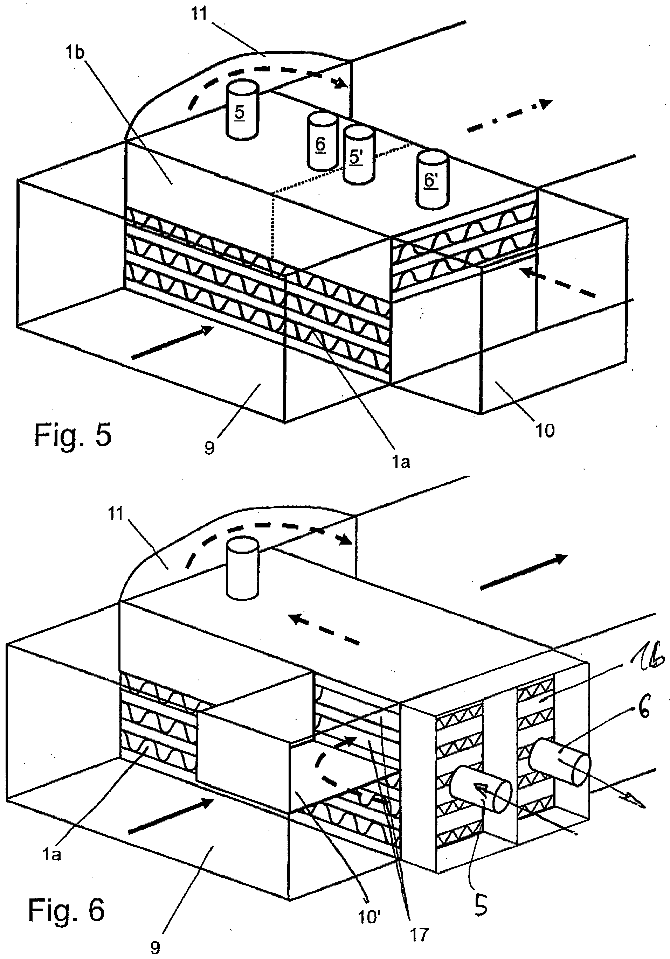

Bei der in Fig. 5 gezeigten Abwandlung des Ausführungsbeispiels aus Fig. 3 liegen anstelle von nur zwei Anschlüssen für flüssiges Kühlmittel vier Anschlüsse 5, 6, 5', 6' vor, wobei zwei der Anschlüsse 5, 6, 5', 6' zu einer separaten Kühlmittelflut gehören. Auf diese Weise ist es z. B. ermöglicht, dass die in Abgasströmungsrichtung erste Flut mit den Anschlüssen 5', 6' ein Kühlmittel von höherer Temperatur, z. B. angeschlossen an den Hauptkühlkreislauf des Verbrennungsmotors, führen, während die nachfolgende zweite Flut mit den Anschlüssen 5, 6 von einem kälteren Kühlmittel z. B. aus einem separaten Niedertemperatur-Kühlkreislauf durchströmt werden. Grundsätzlich ist es möglich, auch für den Ladeluftkühler getrennte Fluten bzw. Anschlüsse für ein flüssiges Kühlmittel vorzusehen, oder, was hinsichtlich der Temperaturen der Ladeluft besonders einfach und zweckmäßig ist, im gezeigten Ausführungsbeispiel den Ladeluftkühler 1 a nur von dem kälteren Kühlmittel der Anschlüsse 5, 6 durchströmen zu lassen.

Fig. 6 zeigt ein weiteres Ausführungsbeispiel, bei dem die Anschlüsse 5, 6 für das flüssige Kühlmittel nicht auf der Oberseite und senkrecht zu beiden Hauptströmungsrichtungen von Ladeluft und Abgas angebracht sind, sondern seitlich, so dass die Zuströmung und Abströmung des flüssigen Kühlmittels jeweils parallel zur Hauptströmungsrichtung des Abgases erfolgt und senkrecht zur Hauptströmungsrichtung der Ladeluft. Dies erfordert zusätzliche Maßnahmen der Führung des Abgases, wozu in einem Randbereich des Sammlers zur Zuführung der Ladeluft 9 ein den Abgasstrom um 90° umlenkender Sammler 10' für das Abgas vorgesehen ist. Nach Eintritt in den eigentlichen Wärmetauscherbereich 1 b wird das Abgas wieder um 90° entgegengesetzt umgelenkt, so dass das Abgas im Eintrittsbereich insgesamt eine in etwa Z-förmige Umlenkung erfährt.

Bei einem weiteren Ausführungsbeispiel gemäß Fig. 7 handelt es sich im Wesentlichen um eine Abwandlung des Ausführungsbeispiels aus Fig. 3, bei dem austrittsseitig des zweiten Wärmetauschers 1 b nach dem Umlenkglied 11 ein Strömungsmittel in Form eines Verteilrohrs 20 vorgesehen ist. Das Verteilrohr 20 schließt an das Umlenkglied 11 an und erstreckt sich weitgehend über die Breite des Ladeluftstroms austrittsseitig des ersten Wärmetauschers 1 a. In dem Verteilrohr 20 sind mehrere Öffnungen 21 über seine Länge verteilt angeordnet, so dass der Abgasstrom über einen räumlich verteilten Durchmischungsbereich 12 in den Ladeluftstrom eingebracht wird.

Vorliegend ist das Verteilrohr 20 außenseitig an dem Gehäuse des Ladeluftstroms angeordnet. Alternativ kann es aber auch innerhalb des Gehäuses geführt sein.

Bei dem Ausführungsbeispiel nach Fig. 8 wurde ebenfalls ergänzend zum Ausführungsbeispiel aus Fig. 3 ein Strömungsmittel 22 zur Verbesserung der Durchmischung der Gasströme vorgesehen. Das Strömungsmittel 22 ist als Mischgitter 23 ausgeformt, das sich im Wesentlichen über den gesamten Querschnitt des zusammengeführten Gaskanals nach der Einmündung des Abgases in die Ladeluft erstreckt. Durch das Mischgitter werden Wirbel in den vereinigten, aber noch teilweise inhomogenen Gasstrom eingeführt, die eine gute Homogenisierung über eine kurze Strömungslänge bewirken.

Es versteht sich, dass ein Verteilrohr 20 und ein Mischgitter 22 auch ergänzende Maßnahmen sein können. Zudem können solche oder andere Strömungsmittel auch mit den anderen Ausführungsbeispielen kombiniert werden.

Bei einer nicht dargestellten Ausführungsform ist der Gaskühler in ein Ansaugmodul des Verbrennungsmotors integriert, welches aus Aluminium oder auch aus Kunststoff bestehen kann.

Bei dem Verbrennungsmotor handelt es sich um einen Dieselmotor oder um einen anderen aufgeladenen Motor mit möglicher Abgasrückführung, zum Beispiel einen Direkteinspritzungs-Ottomotor.

Es versteht sich, dass die individuellen Merkmale der einzelnen Ausführungsbeispiele je nach Anforderungen miteinander kombiniert werden können.

Die Figur 9 zeigt eine schematische Anordnung von zwei Wärmetauschern 1 a, 1 b entsprechend einer alternativen Ausgestaltung zu den in den vorhergehenden Figuren gezeigten Anordnungen.

Der Wärmetauscher 1 a und der Wärmetauscher 1 b müssen sich dabei nicht zwingend berühren, wie es in der Figur 9 gezeigt ist. Auch ist in Figur 9 zu erkennen, dass die Abmessungen der beiden Wärmetauscher 1 a, 1 b, wie die Länge b1 und die Länge b2 der beiden Wärmeübertrager 1 a, 1 b nicht identisch sind. Auch ist es nicht zwingend notwendig, dass die Tiefen a1, a2 der beiden Wärmeübertrager 1 a, 1 b gleich sind.

Im Falle, dass sich die beiden Wärmeübertrager nicht direkt berühren, sind an jedem Wärmeübertrager Anschlussstutzen 5, 6, 5', 6' notwendig. Diese sind in der Figur 9 an der oberen Seite des Wärmeübertragers 1 b und an der unteren Seite des Wärmeübertragers 1 a zu erkennen.

## Patentansprüche

1. Gaskühler für einen Verbrennungsmotor, umfassend
einen ersten Wärmetauscher (1 a) mit einer Mehrzahl von mittels eines flüssigen Kühlmittels gekühlten Strömungskanälen (17) zur Durchströmung mit verdichteter Ladeluft in einer Hauptströmungsrichtung (a) der Ladeluft, und
einen zweiten Wärmetauscher (1 b) mit einer Mehrzahl von mittels des flüssigen Kühlmittels gekühlten Strömungskanälen (17) zur Durchströmung mit Abgas des Verbrennungsmotors in einer Hauptströmungsrichtung (b) des Abgases,
wobei der erste Wärmetauscher (1 a) und der zweite Wärmetauscher (1 b) als baulich integriertes Modul (1) ausgebildet sind,
**dadurch gekennzeichnet,**
**dass** die Hauptströmungsrichtung (a) der Ladeluft und die Hauptströmungsrichtung (b) des Abgases einen Winkel von mehr als 45° einschließen.

2. Gaskühler nach Anspruch 1, **dadurch gekennzeichnet, dass** die Hauptströmungsrichtungen (a, b) von Abgas und Ladeluft im Wesentlichen senkrecht zueinander verlaufen.

3. Gaskühler nach Anspruch 1 oder 2, **dadurch gekennzeichnet, dass** ein gesamter Strömungsquerschnitt des ersten Wärmetauschers (h1*b) größer ist als ein gesamter Strömungsquerschnitt des zweiten Wärmetauschers (h2*a), insbesondere um wenigstens das 2-fache.

4. Gaskühler nach einem der vorhergehenden Ansprüche, **dadurch gekennzeichnet, dass** eine gesamte Strömungslänge (b) des zweiten Wärmetauschers größer ist als eine gesamte Strömungslänge (a) des ersten Wärmetauschers, insbesondere um wenigstens das 1,3-fache.

5. Gaskühler nach einem der vorhergehenden Ansprüche, **dadurch gekennzeichnet, dass** der Abgasstrom nach Austritt aus dem zweiten Wärmetauscher (1 b) in den Ladeluftstrom nach Austritt aus dem ersten Wärmtauscher (1 a) einmündet, insbesondere mittels Führung des Abgasstroms in einem Umlenkglied (11).

6. Gaskühler nach Anspruch 5, **dadurch gekennzeichnet, dass** das Umlenkglied austrittsseitig des zweiten Wärmetauschers angeordnet ist.

7. Gaskühler nach Anspruch 5, **dadurch gekennzeichnet, dass** das Umlenkglied (11) zwischen zwei Strömungswegen (18, 19) des zweiten Wärmetauschers angeordnet ist, insbesondere unter Ausbildung des zweiten Wärmetauschers als U-flow-Wärmetauscher.

8. Gaskühler nach einem der vorhergehenden Ansprüche, **dadurch gekennzeichnet, dass** der Abgasstrom mittels eines Stellglieds (15) wählbar unter Umgehung des zweiten Wärmetauschers (1 b) in den Ladeluftstrom führbar ist.

9. Gaskühler nach Anspruch 8, **dadurch gekennzeichnet, dass** das Stellglied (15) eingangsseitig des zweiten Wärmetauschers (1 b) angeordnet ist.

10. Gaskühler nach einem der vorhergehenden Ansprüche, **dadurch gekennzeichnet, dass** zumindest der Abgaskühler (1 b) zumindest zwei separate Fluten (5, 6, 5', 6') für flüssiges Kühlmittel aufweist.

11. Gaskühler nach einem der vorhergehenden Ansprüche, **dadurch gekennzeichnet, dass** das flüssige Kühlmittel senkrecht zu den beiden Hauptströmungsrichtungen (a, b) zugeführt und/oder abgeführt wird.

12. Gaskühler nach einem der Ansprüche 1 bis 10, **dadurch gekennzeichnet, dass** das flüssige Kühlmittel parallel zu der Hauptströmungsrichtung des Abgases (a) zugeführt und/oder abgeführt wird.

13. Gaskühler nach einem der vorhergehenden Ansprüche, **dadurch gekennzeichnet, dass** zumindest einer der Wärmetauscher (1 a, 1 b) als Stapelscheiben-Wärmetauscher ausgebildet ist.

14. Gaskühler nach einem der vorhergehenden Ansprüche, **dadurch gekennzeichnet, dass** zumindest einer der Wärmetauscher (1 a, 1 b) als Rohrbündel-Wärmetauscher ausgebildet ist.

15. Gaskühler nach einem der vorhergehenden Ansprüche, **dadurch gekennzeichnet, dass** der erste Wärmetauscher (1 a) und der zweite Wärmetauscher (1 b) als verlötete, integrierte Einheit ausgebildet sind.

16. Gaskühler nach einem der Ansprüche 1 bis 14, **dadurch gekennzeichnet, dass** der erste Wärmetauscher (1 a) und der zweite Wärmetauscher (1 b) als separate, insbesondere mittels Dichtungen aneinander festgelegte Bauteile ausgebildet sind.

17. Gaskühler nach einem der vorhergehenden Ansprüche, **dadurch gekennzeichnet, dass** ausgangsseitig zumindest eines der Wärmetauscher ein Strömungsmittel (20, 22) vorgesehen ist, wobei durch das Strömungsmittel eine erhöhte Durchmischung des Abgases mit der Ladeluft erzielbar ist.

18. Gaskühler nach Anspruch 17, **dadurch gekennzeichnet, dass** das Strömungsmittel ein insbesondere ausgangsseitig des zweiten Wärmetauschers (1 b) angeordnetes Verteilrohr (20) umfasst.

19. Gaskühler nach Anspruch 17 oder 18, **dadurch gekennzeichnet, dass** das Strömungsmittel ein Mischgitter (22) umfasst.

## Claims

1. A gas cooler for an internal combustion engine, comprising
a first heat exchanger (1a) with a plurality of flow channels (17) cooled by a liquid coolant for the throughflow of compressed charge air in a main flow direction (a) of the charge air, and
a second heat exchanger (1b) with a plurality of flow channels (17) cooled by the liquid coolant for the throughflow of exhaust gas of the internal combustion engine in a main flow direction (b) of the exhaust gas,
wherein the first heat exchanger (1a) and the second heat exchanger (1b) are formed as an architecturally integrated module (1),
**characterised in that**
the main flow direction (a) of the charge air and the main flow direction (b) of the exhaust gas include an angle of more than 45°.

2. The gas cooler according to claim 1, **characterised in that** the main flow directions (a, b) of the exhaust gas and charge air run substantially perpendicular to each other.

3. The gas cooler according to claim 1 or 2, **characterised in that** a total flow cross-section of the first heat exchanger (h1*b) is greater than a total flow cross-section of the second heat exchanger (h2*a), in particular at least 2-fold.

4. The gas cooler according to one of the preceding claims, **characterised in that** a total flow length (b) of the second heat exchanger is greater than a total flow length (a) of the first heat exchanger, in particular at least 1.3-fold.

5. The gas cooler according to one of the preceding claims, **characterised in that** the exhaust gas flow, after leaving the second heat exchanger (1b), flows into the charge air flow after leaving the first heat exchanger (1a), in particular by guiding the exhaust gas flow in a deflection member (11).

6. The gas cooler according to claim 5, **characterised in that** the deflection member is disposed on the outlet side of the second heat exchanger.

7. The gas cooler according to claim 5, **characterised in that** the deflection member (11) is arranged between two flow paths (18, 19) of the second heat exchanger, in particular by forming the second heat exchanger as a U-flow heat exchanger.

8. The gas cooler according to one of the preceding claims, **characterised in that** the exhaust gas flow can be guided into the charge air flow by means of an actuator (15), selectably by bypassing the second heat exchanger (1b).

9. The gas cooler according to claim 8, **characterised in that** the actuator (15) is arranged on the inlet side of the second heat exchanger (1b).

10. The gas cooler according to one of the preceding claims, **characterised in that** at least the exhaust gas cooler (1b) has at least two separate floods (5, 6, 5', 6') for liquid coolant.

11. The gas cooler according to one of the preceding claims, **characterised in that** the liquid coolant is supplied and/or discharged perpendicular to the two main flow directions (a, b).

12. The gas cooler according to one of claims 1 to 10, **characterised in that** the liquid coolant is supplied and/or discharged parallel to the main flow direction of the exhaust gas (a).

13. The gas cooler according to one of the preceding claims, **characterised in that** at least one of the heat exchangers (1a, 1b) is designed as a stacked plate heat exchanger.

14. The gas cooler according to one of the preceding claims, **characterised in that** at least one of the heat exchangers (1a, 1b) is designed as a tube bundle heat exchanger.

15. The gas cooler according to one of the preceding claims, **characterised in that** the first heat exchanger (1a) and the second heat exchanger (1b) are designed as a soldered, integrated unit.

16. The gas cooler according to one of claims 1 to 14, **characterised in that** the first heat exchanger (1a) and the second heat exchanger (1b) are designed as separate components which are in particular fixed to each other by means of seals.

17. The gas cooler according to one of the preceding claims, **characterised in that** on the outlet side of at least one of the heat exchangers, a flow medium (20, 22) is provided, wherein an increased mixing of the exhaust gas with the charge air can be achieved by means of the flow medium.

18. The gas cooler according to claim 17, **characterised in that** the flow medium comprises a manifold (20) which is in particular arranged on the outlet side of the second heat exchanger (1b).

19. The gas cooler according to claim 17 or 18, **characterised in that** the flow medium comprises a mixing grid (22).

## Revendications

1. Refroidisseur de gaz d'échappement pour un moteur à combustion interne, comprenant
un premier échangeur de chaleur (la) comportant une pluralité de conduits d'écoulement (17) refroidis à l'aide d'un moyen de refroidissement liquide, lesdits conduits d'écoulement servant à la circulation avec de l'air de suralimentation comprimé, suivant une direction principale d'écoulement (a) de l'air de suralimentation, et
un second échangeur de chaleur (1b) comportant une pluralité de conduits d'écoulement (17) refroidis à l'aide du moyen de refroidissement liquide, lesdits conduits d'écoulement servant à la circulation avec des gaz d'échappement du moteur à combustion interne, suivant une direction principale d'écoulement (b) des gaz d'échappement,
où le premier échangeur de chaleur (la) et le second échangeur de chaleur (1b) sont conçus comme un module (1) intégré à la structure,
**caractérisé**
**en ce que** la direction principale d'écoulement (a) de l'air de suralimentation et la direction principale d'écoulement (b) des gaz d'échappement forment l'une par rapport à l'autre un angle de plus de 45°.

2. Refroidisseur de gaz d'échappement selon la revendication 1, **caractérisé en ce que** les directions principales d'écoulement (a, b) des gaz d'échappement et de l'air de suralimentation s'étendent pratiquement de façon perpendiculaire l'une par rapport à l'autre.

3. Refroidisseur de gaz d'échappement selon la revendication 1 ou 2, **caractérisé en ce qu'**une section totale d'écoulement du premier échangeur de chaleur (h1*b) est en particulier au moins 2 fois supérieure à une section totale d'écoulement du second échangeur de chaleur (h2*a).

4. Refroidisseur de gaz d'échappement selon l'une quelconque des revendications précédentes, **caractérisé en ce qu'**une longueur totale d'écoulement (b) du second échangeur de chaleur est en particulier au moins 1,3 fois supérieure à une longueur totale d'écoulement (a) du premier échangeur de chaleur.

5. Refroidisseur de gaz d'échappement selon l'une quelconque des revendications précédentes, **caractérisé en ce que** le flux de gaz d'échappement sortant du second échangeur de chaleur (1b) débouche dans le flux d'air de suralimentation sortant du premier échangeur de chaleur (la), en particulier au moyen d'un guidage du flux de gaz d'échappement dans un élément de retour de flux (11).

6. Refroidisseur de gaz d'échappement selon la revendication 5, **caractérisé en ce que** l'élément de retour de flux est disposé côté sortie du second échangeur de chaleur.

7. Refroidisseur de gaz d'échappement selon la revendication 5, **caractérisé en ce que** l'élément de retour de flux (11) est disposé entre deux chemins d'écoulement (18, 19) du second échangeur de chaleur, en particulier par une configuration du second échangeur de chaleur conçu comme un échangeur de chaleur à flux en forme de U.

8. Refroidisseur de gaz d'échappement selon l'une quelconque des revendications précédentes, **caractérisé en ce que** le flux de gaz d'échappement peut être guidé dans le flux d'air de suralimentation en pouvant choisir, à l'aide d'un actionneur (15), de contourner le second échangeur de chaleur (1b).

9. Refroidisseur de gaz d'échappement selon la revendication 8, **caractérisé en ce que** l'actionneur (15) est disposé côté entrée du second échangeur de chaleur (1b).

10. Refroidisseur de gaz d'échappement selon l'une quelconque des revendications précédentes, **caractérisé en ce qu'**au moins le refroidisseur de gaz d'échappement (1b) présente au moins deux flux séparés (5, 6, 5', 6') pour le moyen de refroidissement liquide.

11. Refroidisseur de gaz d'échappement selon l'une quelconque des revendications précédentes, **caractérisé en ce que** le moyen de refroidissement liquide est fourni et / ou évacué de façon perpendiculaire par rapport aux deux directions principales d'écoulement (a, b).

12. Refroidisseur de gaz d'échappement selon l'une quelconque des revendications 1 à 10, **caractérisé en ce que** le moyen de refroidissement liquide est fourni et / ou évacué parallèlement à la direction principale d'écoulement des gaz d'échappement (a).

13. Refroidisseur de gaz d'échappement selon l'une quelconque des revendications précédentes, **caractérisé en ce qu'**au moins l'un des échangeurs de chaleur (la, 1b) est conçu comme un échangeur de chaleur à plaques empilées.

14. Refroidisseur de gaz d'échappement selon l'une quelconque des revendications précédentes, **caractérisé en ce qu'**au moins l'un des échangeurs de chaleur (la, 1b) est conçu comme un échangeur de chaleur à faisceaux de tubes.

15. Refroidisseur de gaz d'échappement selon l'une quelconque des revendications précédentes, **caractérisé en ce que** le premier échangeur de chaleur (la) et le second échangeur de chaleur (1b) sont conçus comme un ensemble unitaire intégré et brasé.

16. Refroidisseur de gaz d'échappement selon l'une quelconque des revendications 1 à 14, **caractérisé en ce que** le premier échangeur de chaleur (la) et le second échangeur de chaleur (1b) sont conçus comme des composants fixés l'un contre l'autre et séparés en particulier au moyen de joints d'étanchéité.

17. Refroidisseur de gaz d'échappement selon l'une quelconque des revendications précédentes, **caractérisé en ce qu'**il est prévu, côté sortie au moins de l'un des échangeurs de chaleur, un moyen d'écoulement (20, 22) où, grâce au moyen d'écoulement, on peut obtenir un mélange accru des gaz d'échappement avec l'air de suralimentation.

18. Refroidisseur de gaz d'échappement selon la revendication 17, **caractérisé en ce que** le moyen d'écoulement comprend un tube distributeur (20) disposé en particulier côté sortie du second échangeur de chaleur (1b).

19. Refroidisseur de gaz d'échappement selon la revendication 17 ou 18, **caractérisé en ce que** le moyen d'écoulement comprend une grille de mélange (22).
